(19) Europäisches Patentamt
European Patent Office
Office européen des brevets

(11) Publication number: **0 307 502 B1**

(12) **EUROPEAN PATENT SPECIFICATION**

(45) Date of publication of patent specification: **27.05.92**

(51) Int. Cl.[5]: **C07F 9/18**, C07F 9/58, C07F 9/547

(21) Application number: **87113648.7**

(22) Date of filing: **17.09.87**

(54) **Process for preparing phosphorothioates and phosphates.**

(43) Date of publication of application:
**22.03.89 Bulletin 89/12**

(45) Publication of the grant of the patent:
**27.05.92 Bulletin 92/22**

(84) Designated Contracting States:
**AT BE DE ES FR GB IT NL SE**

(56) References cited:
**NL-A- 6 809 749**
**US-A- 3 907 815**

**CHEMICAL ABSTRACTS, vol. 101, no. 9, 27th August 1984, page 654, abstract no. 72835c, Columbus, Ohio, US; V.K. KRISHNAKUMAR: "Synthesis of triaryl phosphates catalyzed by polyethylene glycols in a two-phase system: phase transfer catalysis", & SYNTH. COMMUN. 1984, 14(2), 189-96**

(73) Proprietor: **DOWELANCO**
**9002 Purdue Road**
**Indianapolis, Indiana 46268-3030(US)**

(72) Inventor: **Gatling, Sterling C.**
**708 Adams Drive**
**Midland Michigan 48640(US)**
Inventor: **Krumel, Karl L.**
**3413 Greenbrier**
**Midland Michigan 48640(US)**

(74) Representative: **Huber, Bernhard, Dipl.-Chem. et al**
**Patentanwälte H. Weickmann, Dr. K. Fincke F.A. Weickmann, B. Huber Dr. H. Liska, Dr. J. Prechtel Kopernikusstrasse 9 Postfach 86 08 20**
**W-8000 München 86(DE)**

**EP 0 307 502 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The present invention is directed to the preparation of certain phosphorothioates and phosphates in high yields and of high purity. The compounds prepared in the present invention correspond to he general formulae

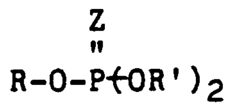

I,

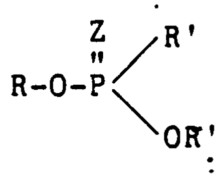

II;

or

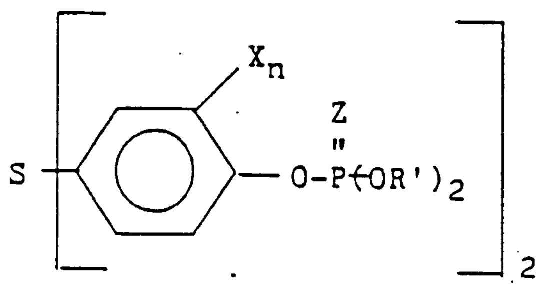

III

wherein:

R is 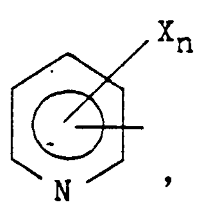 , 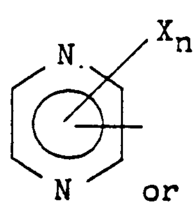 or 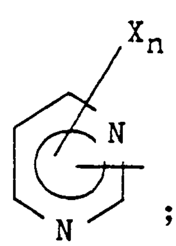 ;

each R' independently represent alkyl of 1 to 6 carbon atoms, phenyl or pyridyl;
each X independently represent bromo, chloro, fluoro, iodo, $-NR^2R^3$ wherein $R^2$ and $R^3$ independently represent hydrogen or alkyl of 1 to ,6 carbon atoms, cyano, nitro, alkyl of 1 to 6 carbon atoms, alkoxy of 1 to 6 carbon atoms, alkylthio of 1 to 6 carbon atoms or alkylsulfinyl of 1 to 6 carbon atoms;
n is 0, 1, 2 or 3 with the proviso, that when n is more than one, all substituents are sterically compatible with each other; and
Z is oxygen or sulfur.

NL-A-6809749 describes a process for the preparation of 0,0-dialkyl-0-arylthiophosphoric acid esters by

reaction of 0,0-dialkyldiphosphoric acid chloride with a phenol or phenolate in the presence of water and a tertiary amine catalyst.

Subject matter of the present invention is a process for preparing phosphoroor phosphonothioates or -phosphates of the general formula (I), (II) or (III) according to claim 1.

Preferred embodiments of this process are subject matter of claims 2 to 10.

An advantage of the present invention is the production of the above-indicated products in high yields and in high purity with reduced amounts of the by-product tetraethyl dithiopyrophosphate, also known as sulfotepp.

The term "alkyl of 1 to 4 carbon atoms" is employed to designate straight chain alkyls of 1 to 6 carbon atoms, branched chain alkyls of 3 to 6 carbon atoms and cyclic alkyls of 3 to 6 carbon atoms such as, for example, methyl, ethyl, propyl, butyl, isopropyl, isobutyl, secondary butyl, tertiary butyl, cyclopropyl, cyclobutyl, amyl and cyclo.

The terms "alkoxy of 1 to 4 carbon atoms," "alkylthio of 1 to 4 carbon atoms," "alkylsulfinyl of 1 to 4 carbon atoms" and "alkylsulfonyl of 1 to 4 carbon atoms" are employed to designate alkoxy and alkylthio groups of the formula

-Y-alkyl

wherein Y is oxygen, sulfur, sulfinyl or sulfonyl and alkyl is defined as hereinabove set forth for "alkyl of 1 to 6 carbon atoms."

The term "sterically acceptable" is employed to designate X substituent groups which are not affected by steric hindrance as defined in The Condensed Chemical Dictionary, 7th Edition, Reinhold Publishing Co., N.Y., page 893 (1966) which definition is as follows:

"steric hindrance. A characteristic of molecular structure in which the molecules have a spatial arrangement of their atoms such that a given reaction with another molecule is prevented or retarded in rate."

Steric hindrance may be further defined as compounds having substituents whose physical bulk does not require confinement within volumes insufficient for the exercise of their normal behavior as discussed in Organic Chemistry of D. J. Cram and G. Hammon, 2nd Edition, McGraw-Hill Book Co., N.Y., page 215 (1964).

In the process of the present invention, the compounds of Formulae I, II and III are prepared by reacting under alkaline conditions at a pH of from 7 to 13 substantially equimolar amounts of a compound corresponding to one of the formulae

$R\text{-}O^{\ominus}M^{\oplus}$ IV

or

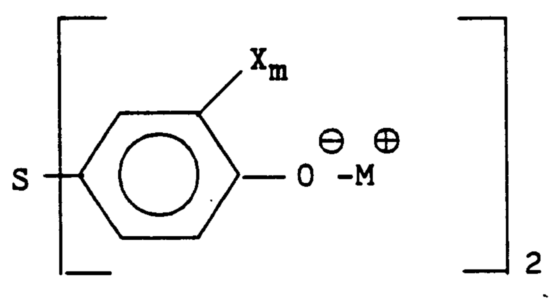

V

with a phosphorochloridate or phosphorochloridothioate of one of the formulae

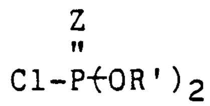

VI

or

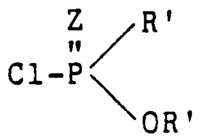

VII

in the presence of an aqueous solvent system comprising from 1 part water and from 0.1 to 1 part of a hydrocarbon or chlorinated hydrocarbon solvent. In the above formulae, R, R', X, M and Z are as hereinbefore defined and M represents alkali metal or alkaline earth metal. In order to ensure a complete reaction, it is desirable to use an excess of the IV or V reactant. The reaction is also carried out in the presence of a catalytic amount of a tertiary amine catalyst and a nonionic surfactant having a hydrophilic-lipophilic balance value (HLB) in the range of from 1 to 20 or more. Surfactants with HLB values of 5-15 are preferred.

In carrying out this reaction, the salt reactant and the phosphorochloridate or phosphorochloridothioate reactant are mixed and contacted together in any convenient fashion, and the resulting mixture maintained for a period of time at a temperature in the range of from 0° to 100°C to complete the reaction. The reaction is usually conducted under reflux conditions.

The term "alkali metal" is employed herein to represent sodium, potassium, rubidium, lithium and cesium. The term "alkaline earth metal" is employed herein to represent calcium, strontium, barium, radium, and magnesium.

The tertiary amines are used in the instant process in small but catalytic amounts. For example, amounts of from 0.05 to 5 mole percent, based on the alkali metal or alkaline earth metal salt reactant are suitable, but amounts of from 0.1 to 1.0 mole percent are generally preferred. Examples of suitable tertiary amines include aliphatic trihydrocarbyl amines (e.g. trimethylamine, ethyldimethylamine, butyldimethylamine and N,N,N',N'-tetramethylethylenediamine); aliphatic heterocyclic amines (e.g. 1-azabicyclo[2.2.2]octane, 1-methyl-2-imidazoline and 1-methylpyrrolidine); mixed aliphatic/aromatic amines (e.g. 4-(N,N-dimethylamino)-pyridine, 4-(N-pyrrolidino)pyridine and phenyldimethylamine); and other similar organic, sterically unhindered, nucleophilic, tertiary amines.

Suitable inert organic liquids which are employed as a part of the two-phase solvent system include, for example, hydrocarbon solvents (e.g. benzene, toluene, xylene, cyclohexane, etc.), chlorinated hydrocarbon solvents (e.g. methylene chloride, chloroform, carbon tetrachloride, tetrachloroethylene, etc.) and the like.

Representative surfactants having a hydrophilic lipophilic balance value (HLB) in the range of from 1.0 to 20 or more include PG 26-2, PG 59-13, Brij® 97, Atlox® 3434E, Atmos® 300 and the calcium salt of dodecylbenzene sulfonic acid (defined hereinafter). Other known surfactants meeting this criteria and which are useful in carrying out the present invention are taught in McCutcheon's Detergents and Emulsifiers, North American Edition, 1983 Annual. The listed surfactants include condensation products of alkylene oxides with organic acids, polyoxyethylene derivatives of sorbitan esters, complex ether alcohols and the like. The surfactant is employed in amounts of from 0.01 to 5.0 weight percent, based on the reactants. It is generally preferred to use the surfactant in amounts of from 0.05 to 2.0 weight percent.

The alkaline conditions under which this reaction is carried out can be easily achieved by conducting the process in the presence of caustic (NaOH) or other conventional bases or by the use of an appropriate buffer system. The specific base employed is not critical and the only limitation on the base used is that it not unfavorably react with the reactants to prevent the desired reaction from taking place.

Agitation (e.g. stirring, swirling, etc.) of the reaction mixture is important, especially since this process is conducted in 2-phase liquid reaction medium, (e.g. solvent and water).

The following examples illustrate the present invention and the manner by which it can be practiced but, as such, should not be construed as limitations upon the overall scope of the same.

Example I Preparation of 0,0-diethyl 0-(3,5,6--trichloro-2-pyridinyl)phosphorothioate

Into a 700 ml baffled reactor equipped with a mechanical stirrer, a condenser, a dropping funnel, a thermometer and a pH probe were placed 99.7 grams (g) (0.419 mole) of sodium 3,5,6-trichloro-2-pyridinate hydrate, 105 milliliters (ml) of methylene chloride, 332 ml of water, 0.051 g (0.00419 mole (0.1 mole percent)) of 4-dimethylamino pyridine, 24.1 g of sodium chloride, 3.0 g of sodium hydroxide and 1.05 g (1.0 weight percent) of polyglycol 26-2 surfactant, which is a reaction product of 1 mole of di-secondary butylphenol, 5 moles of ethylene oxide and 4 moles of propylene oxide.

The reaction mixture was heated to a reflux temperature of 39°C while stirring at 1,000 RPM and 73.2 g (0.389 mole) of 0,0-diethylphosphorochloridothioate was added as a single shot during 5 to 10 seconds. The reaction mixture was heated at a reflux temperature of 45° to 48°C for 2 hours during which time the pH dropped from an initial value of 12.5 to a final value of 11.9.

The reaction mixture was filtered to remove excess sodium 3,5,6-trichloro pyridinate. The organic layer was separated from the aqueous layer and washed with 60 ml of water. The methylene chloride was then removed by heating under reduced pressure leaving 134.2 g (95.5 percent of theoretical) of the desired above-named product having a purity of 97 percent.

Following the procedure as outlined in Example I, changing only the surfactant and the amount of surfactant employed, the following yields and purity of the 0,0-diethyl 0-(3,5,6-trichloro-2-pyridinyl)-phosphorothioate product are obtained:

TABLE 1

| Surfactant Employed | Amount of Surfactant in Percent by Weight of Total Reaction Mixture | HLB of Surfactant | Product Yield | Product Purity | Sulfotepp in Percent of Product |
|---|---|---|---|---|---|
| ATLOX® 3434F[1] | 0.4 | >1 | 94.7 | 96.6 | 0.08 |
| Calcium salt of dodecylbenzene sulfonic acid | 0.7 | >20 | 92.4 | 96.3 | 0.10 |
| " | 0.4 | >20 | 93.3 | 95.6 | 0.10 |
| Brij® 97[2] | 1.0 | 12.4 | 92.5 | ~97 | 0.12 |
| ATMOS® 300[3] | 1.0 | 2.8 | 94.8 | ~97 | 0.10 |
| PG 26-2 | 0.5 | 9.0 | 94.5 | 97 | 0.15 |
| " | 0.2 | 9.0 | 94.2 | 97 | 0.19 |
| PG 59-13[4] | 0.5 | 10-11 | 96.2 | 97.7 | 0.08 |

[1]Proprietary formulated material of ICI Americas, Inc., Wilmington, Delaware, which is a nonionic/anionic material.
[2]Proprietary material of ICI Americas, Inc., which is a nonionic polyoxyethylene oleyl ether.
[3]Proprietary material of ICI Americas, Inc., which is a nonionic liquid prepared from mono and diglycerides of fat forming fatty acids.
[4]A condensation product of 8 moles of ethylene oxide and 1 mole of tridecylalcohol.

Example II Preparation of 0,0-diethyl 0-(3,5,6--trichloro-2-pyridinyl)phosphorothioate

Into a one liter par bomb were placed 90.0 g (0.415 mole) of 2,3,5,6-tetrachloropyridine, 53.32 g (0.9521 mole) of potassium hydroxide, and 306 g (16.98 mole) of water. The bomb was sealed and the reaction mixture was stirred and heated to 160 °C at 80 psi for 30 minutes. After cooling, the potassium pyridinate reaction product was added to a 700 ml esterification reactor as described in Example I followed by the addition of 105 ml of methylene chloride, 0.5 g (0.56 weight percent) of polyglycol 26-2, and 0.045 g (0.0004 moles) of 4-dimethylaminopyridine. The reaction mixture was then heated to a reflux temperature of 40 °C while stirring at 740 rpm and 78 g (0.414 moles) of 0.0-diethylphosphorochloridothioate was added as a single shot over 5 to 10 seconds. The reaction mixture was heated to a reflux temperature of 48 °C for two hours during which time the pH dropped from 12.8 to 11.9. The reaction mixture was filtered to remove excess pyridinate. The organic layer was separated from the aqueous layer and washed with 60 ml of water. The methylene chloride was then removed by evaporation under reduced pressure leaving 141.5 g (94.6 percent of theoretical) of the above-named product having a purity of 96.9 percent and a sulfotepp concentration of 0.12 percent.

**Claims**

**1.** A process for preparing a compound corresponding to one of the formulae

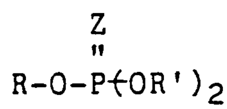

I,

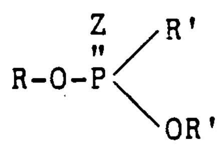

II,

or

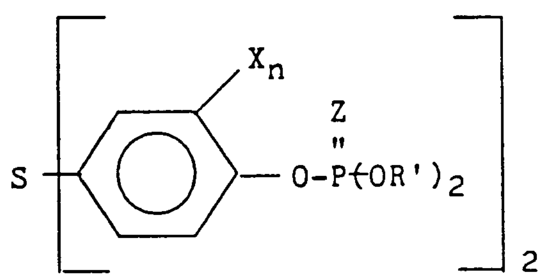

III

wherein:

R is 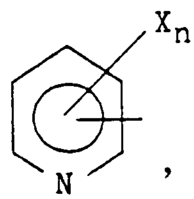, 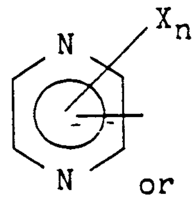 or 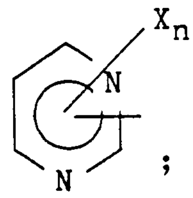;

each R' independently represent alkyl of 1 to 6 carbon atoms, phenyl or pyridyl;
each X independently represent bromo, chloro, fluoro, iodo, cyano, nitro, alkyl of 1 to 6 carbon atoms, alkoxy of 1 to 6 carbon atoms, alkylthio of 1 to 6 carbon atoms or alkylsulfinyl of 1 to 6 carbon atoms or $-NR^2R^3$ wherein $R^2$ and $R^3$ independently represent hydrogen or alkyl of 1 to 6 carbon atoms;
n is 0, 1, 2 or 3 with the proviso that when n is more than one, all substituents are sterically compatible with each other; and
z is oxygen or sulfur which comprises reacting under alkaline conditions substantially equimolar amounts of a compound (a) corresponding to one of the formulae

$R\text{-}O^{\ominus}M^{\oplus}$ IV

or

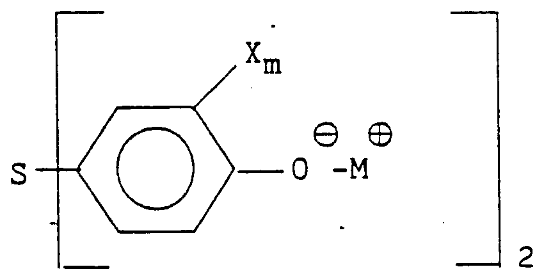
V

with a compound (b) corresponding to one of the formulae

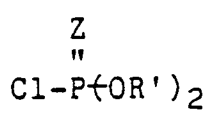
VI

or

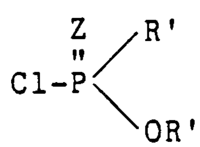
VII

wherein R, R', X, M and Z are as defined and M represents an alkali metal or alkaline earth metal in the presence of an aqueous solvent system and in the presence of a nonionic surfactant having a HLB Value of from 1 to 20 and a catalytic amount of a tertiary amine.

**2.** The process as defined in Claim 1 wherein the compound prepared corresponds to the formula

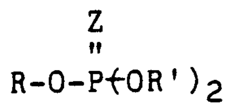

I

3. The process as defined in Claim 1 wherein the compound prepared corresponds to the formula

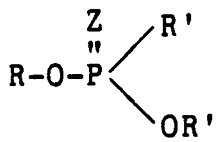

II

4. The process as defined in Claim 1 wherein the compound prepared corresponds to the formula

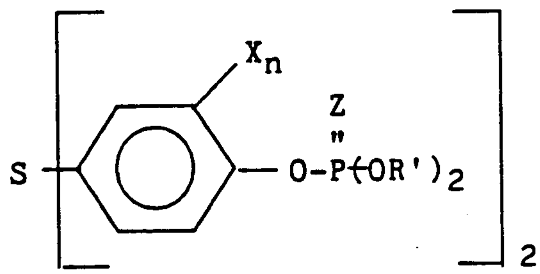

III

5. The process as defined in Claim 2 wherein R is

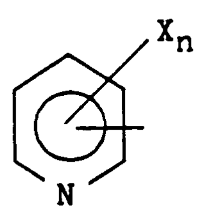

and R′ is alkyl of 1 to 6 carbon atoms.

6. The process as defined in Claim 5 wherein R is 3,5,6-trichloro-2-pyridinyl.

7. The process as defined in Claim 6 wherein R′ is methyl.

8. The process as defined in Claim 6 wherein R′ is ethyl.

9. The process as defined in Claim 2 wherein the compound (a) is sodium or potassium 0-3,5,6-trichloro-2-pyridinate and the compound (b) is 0,0-diethylphosphorochloridothioate; said aqueous solvent system is a mixture of methylene chloride and water; and the process is conducted at a reaction temperature of from 0° to 100° C.

10. The process as defined in Claim 9 wherein the nonionic surfactant is present in an amount of from 0.05 to 2.0 weight percent.

**Revendications**

**1.** Procédé pour préparer un composé correspondant à l'une des formules

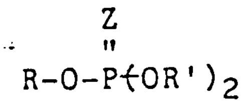 I,

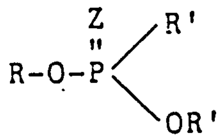 II,

et

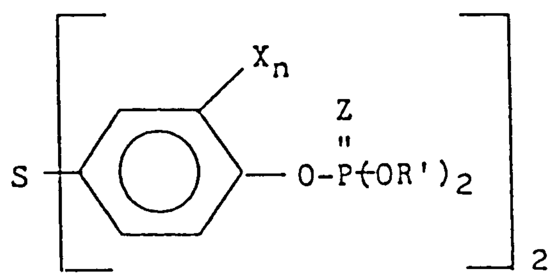 III

dans lesquelles
R représente

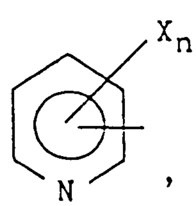 , 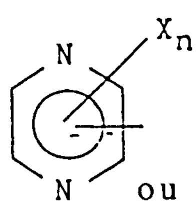 ou 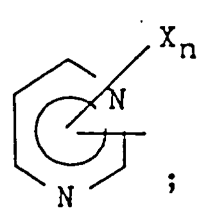 ;

chaque R' représente indépendamment un groupe alkyle ayant 1 à 6 atomes de carbone, un groupe phényle ou pyridyle,
chaque X représente indépendamment un groupe bromo, chloro, fluoro, iodo, cyano, nitro, alkyle ayant 1 à 6 atomes de carbone, alcoxy ayant 1 à 6 atomes de carbone, alkylthio ayant 1 à 6 atomes de carbone ou alkylsulfinyle ayant 1 à 6 atomes de carbone, ou un groupe $-NR^2R^3$ dans lequel $R^2$ et $R^3$ représentent indépendamment un atome d'hydrogène ou un groupe alkyle ayant 1 à 6 atomes de carbone,
n vaut 0, 1, 2 ou 3, étant entendu que lorsque n est supérieur à 1, tous les substituants sont stériquement compatibles entre eux, et
Z représente un atome d'oxygène ou de soufre,

qui comprend la réaction, dans des conditions alcalines, de quantités pratiquement équimolaires d'un composé (a) correspondant à l'une des formules

R-O⊖M⊕ IV

et

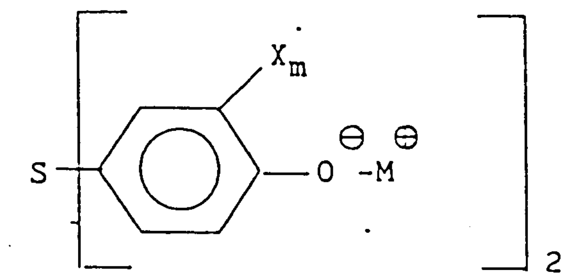

V

et d'un composé (b) correspondant à l'une des formules

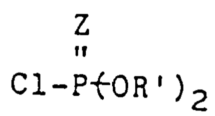

VI

et

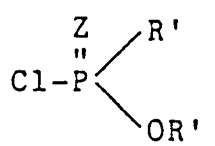

VII

formules dans lesquelles R, R', X, M et Z sont tels que définis plus haut et M représente un métal alcalin ou alcalinoterreux, en présence d'un système solvant aqueux et en présence d'un tensioactif non ionique ayant une valeur BHL de 1 à 20, et d'une quantité catalytique d'une amine tertiaire.

2. Procédé selon la revendication 1, dans lequel le composé préparé correspond à la formule

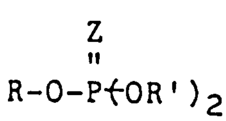

I

3. Procédé selon la revendication 1, dans lequel le composé préparé correspond à la formule

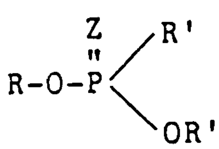

II

4. Procédé selon la revendication 1, dans lequel le composé préparé correspond à la formule

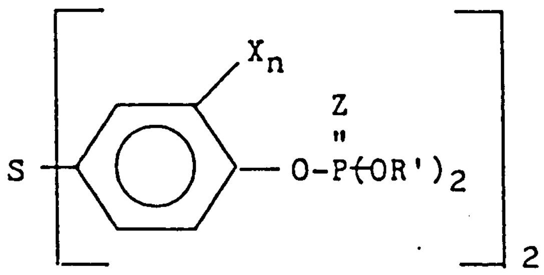

III

5. Procédé selon la revendication 2, dans lequel R représente

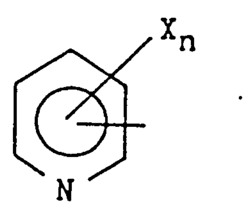

et R' est un groupe alkyle ayant 1 à 6 atomes de carbone.

6. Procédé selon la revendication 5, dans lequel R est un groupe 3,5,6-trichloro-2-pyridinyle.

7. Procédé selon la revendication 6, dans lequel R' est un groupe méthyle.

8. Procédé selon la revendication 6, dans lequel R' est un groupe éthyle.

9. Procédé selon la revendication 2, dans lequel le composé (a) est le 3,5,6-trichloro-2-pyridinolate de sodium ou de potassium et le composé (b) est le phosphorochloridothioate de O,O-diéthyle, ledit système solvant aqueux est un mélange de chlorure de méthylène et d'eau, et le procédé est conduit à une température de réaction de 0° à 100°C.

10. Procédé selon la revendication 9, dans lequel le tensioactif non ionique est présent en une proportion de 0,05 à 2,0 % en poids.

**Patentansprüche**

1. Verfahren zum Herstellen einer Verbindung, entsprechend einer der Formeln

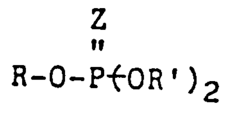

I,

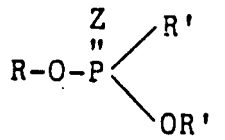

II,

oder

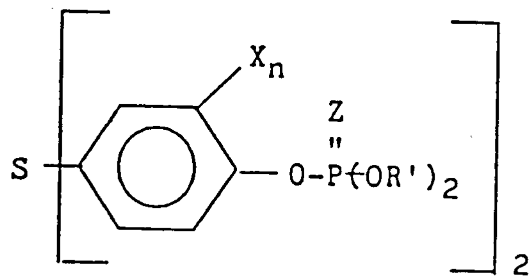

III

worin:

R 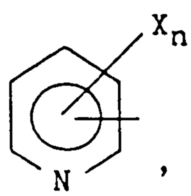 , 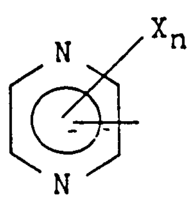 oder 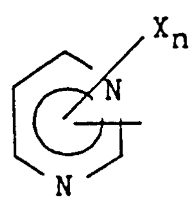 ist,

jedes R' unabhängig Alkyl von 1 bis 6 Kohlenstoffatomen, Phenyl oder Pyridyl darrstellt,

jedes X unabhängig Brom, Chlor, Fluor, Iod, Cyano, Nitro, Alkyl von 1 bis 6 Kohlenstoffatomen, Alkoxy von 1 bis 6 Kohlenstoffatomen, Alkylthio von 1 bis 6 Kohlenstoffatomen oder Alkylsulfinyl von 1 bis 6 Kohlenstoffatomen oder $-NR^2R^3$ darstellt, worin $R^2$ und $R^3$ unabhängig Wasserstoff oder Alkyl von 1 bis 6 Kohlenstoffatomen darstellen,

n 0, 1, 2 oder 3 ist, vorausgesetzt, daß wenn n größer 1 ist, alle Substituenten miteinander sterisch kompatibel sind, und

Z Sauerstoff oder Schwefel ist,

umfassend die Reaktion unter alkalischen Bedingungen von im wesentlichen äquimolaren Mengen einer Verbindung (a), entsprechend einer der Formeln

$R\text{-}O^{\ominus}M^{\oplus}$ IV

oder

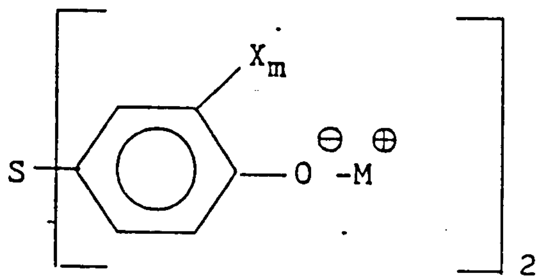 V

mit einer Verbindung (b), entsprechend einer der Formeln

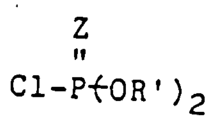 VI

oder

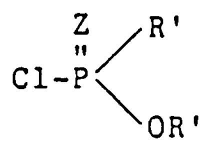 VII

worin R, R', X, M und Z gemäß Definition sind und M ein Alkalimetall oder Erdalkalimetall darstellt, in Gegenwart eines wäßrigen Lösungsmittelsystems und in Gegenwart eines nichtionischen oberflächenaktiven Mittels mit einem HLB-Wert von 1 bis 20 und einer katalytischen Menge eines tertiären Amins.

**2.** Verfahren nach Anspruch 1, worin die hergestellte Verbindung der Formel

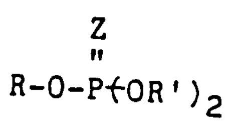 I

entspricht.

**3.** Verfahren nach Anspruch 1, worin die hergestellte Verbindung der Formel

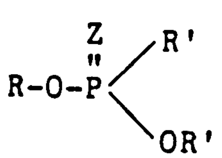 II

entspricht.

4. Verfahren nach Anspruch 1, worin die hergestellte Verbindung der Formel

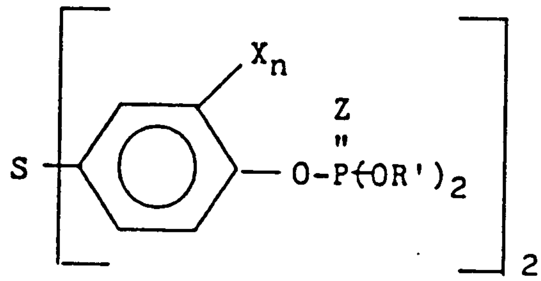

III

entspricht.

5. Verfahren nach Anspruch 2, worin R

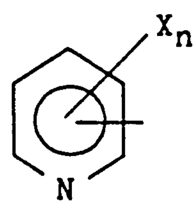

ist und R' Alkyl von 1 bis 6 Kohlenstoffatomen ist.

6. Verfahren nach Anspruch 5, worin R 3,5,6-Trichlor-2-pyridinyl ist.

7. Verfahren nach Anspruch 6, worin R' Methyl ist.

8. Verfahren nach Anspruch 6, worin R' Ethyl ist.

9. Verfahren nach Anspruch 2, worin die Verbindung (a) Natrium- oder Kalium-O-3,5,6-trichlor-2-pyridinat ist und die Verbindung (b) O,O-Diethylphosphorchloridothioat ist, wobei das wäßrige Lösungsmittelsystem ein Gemisch von Methylenchlorid und Wasser ist und das Verfahren bei einer Reaktionstemperatur von 0° bis 100° C durchgeführt wird.

10. Verfahren nach Anspruch 9, worin das nichtionische oberflächenaktive Mittel in einer Menge von 0,05 bis 2,0 Gewichtsprozent vorhanden ist.